# EUROPEAN PATENT SPECIFICATION

(11) **EP 4 606 597 B1**
(45) Date of publication and mention of the grant of the patent: **02.09.2026**
(21) Application number: 25157443.0
(22) Date of filing: 12.02.2025
(51) Int. Cl.: B60B 5/02, B60B 7/02, B60B 7/08, B60B 7/06

(54) **VEHICLE WHEEL STRUCTURE**
FAHRZEUGRADSTRUKTUR
STRUCTURE DE ROUE DE VÉHICULE

(30) Priority: 16.02.2024 JP 2024021661
(43) Date of publication of application: 27.08.2025
(73) Proprietor: TOYOTA JIDOSHA KABUSHIKI KAISHA, Toyota-shi, Aichi-Ken, 471-8571 (JP)
(72) Inventor: ISHIKAWA, Tomoyuki, Toyota-shi, 471-8571 (JP); KUSUNOKI, Hideya, Toyota-shi, 471-8571 (JP)
(74) Representative: J A Kemp LLP

(56) References cited:
- EP-A1- 4 056 382
- CN-A- 109 153 285
- DE-A1- 102018 203 805
- FR-A1- 3 065 397
- US-A1- 2022 305 845
- US-B2- 11 254 160

## Description

### BACKGROUND OF THE INVENTION

### 1. Field of the Invention

The invention relates to a vehicle wheel structure.

### 2. Description of Related Art

Generally, for example, a cap described in Japanese Unexamined Patent Application Publication No. 2016-193693 (JP 2016-193693 A) is known. The existing cap has three engaging portions, that is, an engaging portion that is engaged with a step of a wheel and two engaging portions that are respectively engaged with through-holes provided at two locations. The existing cap is positioned in a radial direction and in a circumferential direction with respect to the wheel in a manner such that the three engaging portions are engaged with the step and the through-holes of the wheel. EP 4 056 382 A1 discloses a road vehicle wheel assembly.

### SUMMARY OF THE INVENTION

In recent years, for the purpose of improving the design and aerodynamic characteristics of a wheel, a wheel attachment member, such as a wheel cover and an accessory piece including the above-described existing cap, can be attached to the wheel. In this case, the shape of the wheel attachment member can adopt not only a frame shape like the above-described existing cap but also a plate shape.

Incidentally, once a vehicle drives, external force that acts on a wheel attachment member in a direction to detach the wheel attachment member can occur due to wind pressure, vibration, and a collision of water, snow, or the like. In recent years, a wheel to be assembled to a vehicle tends to increase in diameter (increase in size), so large centrifugal force can occur in a wheel attachment member that rotates with the wheel.

For these reasons, in a case where an engagement structure in the existing cap is adopted, when material degradation occurs in the engaging portions or when external force or centrifugal force acts on a wheel attachment member, that is, the engaging portions, the engaging portion engaged with the step can particularly relatively move in a direction to separate from the step. Thus, engagement force decreases as a result of a reduction in engagement overlap width between the step and the engaging portion, with the result that there are concerns that detachment of the wheel attachment member can easily occur.

The invention provides a vehicle wheel structure capable of suppressing detachment of a wheel attachment member attached to a wheel.

An aspect of the invention provides a vehicle wheel structure. The vehicle wheel structure includes a wheel configured to support a tire and be assembled to a vehicle, and a wheel attachment member attached to the wheel. The wheel attachment member includes a body and an engaging portion provided at the body. The wheel has an engaged portion provided so as to extend to engage with the engaging portion. In a state where the engaging portion and the engaged portion are engaged with each other to attach the wheel attachment member to the wheel, in a region in which the engaging portion relatively moves with respect to the engaged portion, the engaged portion is provided so as to extend to relatively approach the engaging portion. The engaged portion is provided at a spoke, the spoke coupling a hub mounting portion to a rim, the hub mounting portion being assembled to a hub of the vehicle at a center side of the wheel, the rim supporting the tire at an outer peripheral side of the wheel. The engaging portion is configured to engage with the engaged portions respectively provided at the adjacent two spokes in a circumferential direction of the wheel, The vehicle wheel structure is characterised in that the engaged portions respectively provided at the adjacent two spokes are provided at the spokes so as to extend parallel to each other from the hub mounting portion side toward the rim side.

With the vehicle wheel structure according to the invention even when the engaging portion relatively moves with respect to the engaged portion, the engaged portion can be present at a destination of movement of the engaging portion. Thus, even when external force or centrifugal force acts on the wheel attachment member and, therefore, the engaging portion relatively moves with respect to the engaged portion, an engaged state of the engaging portion with the engaged portion can be maintained. Therefore, it is possible to suppress detachment of the wheel attachment member from the wheel.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view for illustrating a vehicle wheel structure;
FIG. 2 is a cross-sectional view taken along the line II-II in FIG. 1;
FIG. 3 is a view for illustrating a wheel;
FIG. 4 is a view for illustrating engaged portions provided at the wheel so as to extend;
FIG. 5 is a view for illustrating a wheel attachment member;
FIG. 6 is a cross-sectional view for illustrating an engaging portion of the wheel attachment member;
FIG. 7 is a schematic diagram for illustrating relative movement of the engaging portion;
FIG. 8 is a schematic diagram for illustrating relative movement of the engaging portion;
FIG. 9 is a view for illustrating an engaged state of the engaging portion with the engaged portions;
FIG. 10 is a view for illustrating a wheel according to a first modification;
FIG. 11 is a view for illustrating engaged portions provided at the wheel so as to extend according to the first modification;
FIG. 12 is a view for illustrating an engaged state of the engaging portion with the engaged portions according to the first modification; and
FIG. 13 is a view for illustrating a wheel attachment member according to a second modification.

### DETAILED DESCRIPTION OF EMBODIMENTS

Hereinafter, a vehicle wheel structure according to an embodiment of the invention will be described in details with reference to the attached drawings. The scope of the nvention is defined in appended claims.

### 1. Embodiment

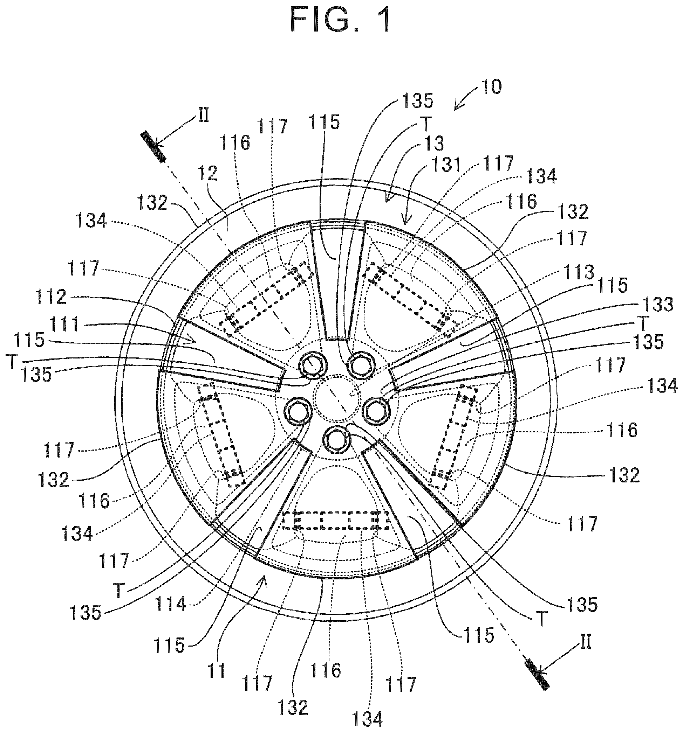

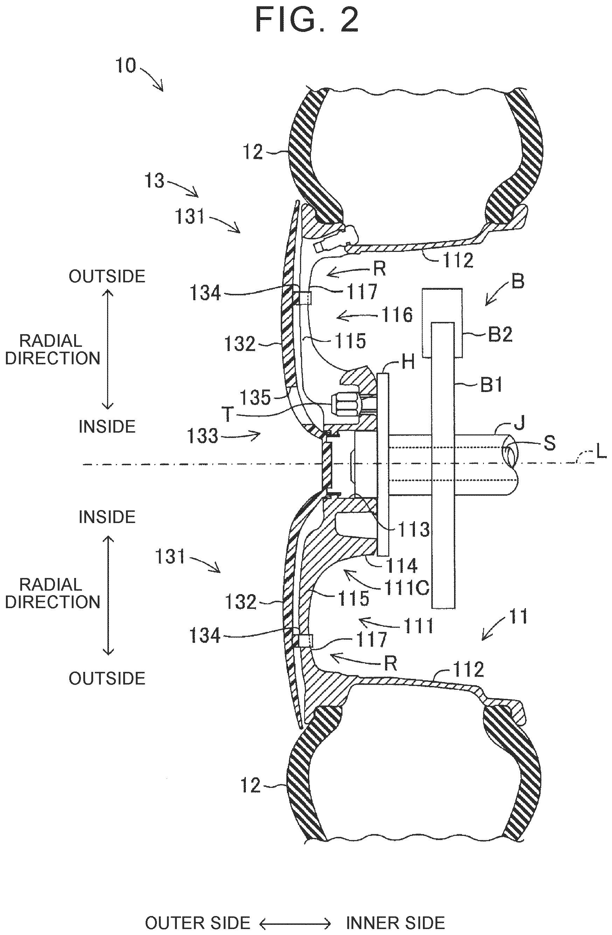

As shown in FIG. 1 and FIG. 2, a vehicle wheel structure 10 according to the present embodiment includes a wheel 11 that is a component of a tire-wheel assembly of a vehicle. The wheel 11 supports a tire 12 and is assembled to the vehicle. The vehicle wheel structure 10 according to the present embodiment includes a wheel cover 13 serving as a wheel attachment member attached to the wheel 11. The vehicle wheel structure 10 described below is an example of a case where the vehicle wheel structure 10 is applied to a tire-wheel assembly that is a drive wheel. A case where the vehicle wheel structure 10 is applied to a tire-wheel assembly that is a drive wheel will be illustrated; however, the vehicle wheel structure 10 is, of course, applicable to a tire-wheel assembly that is a driven wheel.

When the wheel 11 is assembled to the vehicle, a side where a vehicle body of the vehicle is located with respect to the wheel 11 is the "inner side" and an opposite side where no vehicle body is located is the "outer side". In the following description, the side that is the "outer side" in the wheel 11 may also be referred to as "design surface". In the following description, a direction parallel to a rotation axis L passing through the center of the tire-wheel assembly including the wheel 11 is referred to as "axial direction", and a direction orthogonal to the rotation axis L is referred to as "radial direction".

The wheel 11 is made of an alloy of aluminum or the like or made of steel. The wheel 11 is configured to include a disc 111 having a disc shape and an annular rim 112 provided at an outer periphery of the disc 111 and holding the tire 12. In the present embodiment, the wheel 11 is made of an alloy of aluminum or the like, and, as shown in FIG. 2, a case where the wheel 11 is of a one-piece type in which the disc 111 and the rim 112 are integrally molded with each other is illustrated.

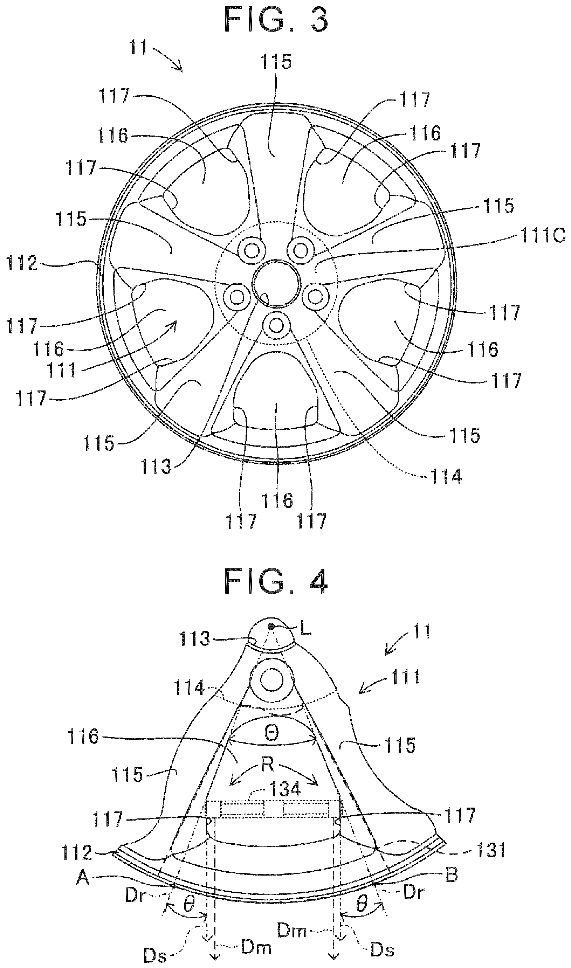

As shown in FIG. 2 and FIG. 3, the disc 111 has a hub hole 113 formed so as to extend along the axial direction through a central part 111C of the disc 111. Here, the hub hole 113 has a projection on its inner periphery in a circumferential direction. When, for example, the wheel cover 13 is attached, the hub hole 113 can function as a hole for fixing the wheel cover 13 by engaging a hook member of the wheel cover 13 with the projection. The hub hole 113 can also function as a hole for mounting an ornament to be provided on the wheel 11 in a case where no wheel cover 13 is attached.

The disc 111 has a hub mounting portion 114 that is fixed to the hub H by fastening members T, that is, hub nuts, hub bolts, or the like, when the wheel 11 is assembled to the vehicle on the inner side. The hub mounting portion 114 is provided at a center side, that is, the central part 111C, of the wheel 11.

The disc 111 has spokes 115 that couple the hub mounting portion 114 to the rim 112. The rim 112 supports the tire 12 at an outer peripheral side that is an outer side of the wheel 11 in the radial direction. In the present embodiment, a case where the disc 111, that is, the wheel 11, includes five spokes 115 radially extending from the hub mounting portion 114 toward the rim 112 in the radial direction is illustrated.

The disc 111 also has air holes 116 each formed between any adjacent spokes 115. In the present embodiment, as shown in FIG. 3, a case where the disc 111 has five air holes 116 each defined by the two spokes 115, the hub mounting portion 114, and the rim 112 is illustrated. Depending on the layout and shape of the spokes 115, each of the air holes 116, for example, may be defined by the two spokes 115 and the rim 112 or may be defined by the two spokes 115 and the hub mounting portion 114.

As will be described later, each of the engaged portions 117 is provided so as to extend along a side face of a corresponding one of the spokes 115 in the circumferential direction to engage with a corresponding one of the engaging portions 134 provided at a body 131 of the wheel cover 13. In this case, as shown in FIG. 4, each of the engaged portions 117 is provided so as to extend such that an extension direction Ds of the engaged portion 117, oriented outward in the radial direction, and a moving direction Dm of the engaging portion 134, oriented outward in the radial direction, are parallel to each other in a region R in which the engaging portion 134 relatively moves with respect to the engaged portions 117.

Specifically, the extension direction Ds in which the engaged portion 117 is provided so as to extend is set so as to have an angle θ (θ ≥ Θ/2) with respect to the radial direction Dr indicated by the alternate long and two-short dashed line along the side face of the spoke 115. Here, Θ is the angle of corner ALB formed by point A and point B in the radial direction Dr and the rotation axis L on an imaginary plane (not shown) orthogonal to the rotation axis L, and angle θ is set to Θ/2 in the present embodiment. Thus, as will be described later, each of the engaged portions 117 according to the present embodiment is provided so as to extend such that the moving direction Dm of the engaging portion 134 and the extension direction Ds are parallel to each other in a situation in which the engaging portion 134 relatively moves with respect to the engaged portions 117.

In the present embodiment, the engaged portions 117 are respectively provided at the side faces of the adjacent two spokes 115 so as to extend from the hub mounting portion 114 side toward the rim 112 side. In the present embodiment, the two engaged portions 117 are provided so as to extend in a manner such that the extension directions Ds of the two engaged portions 117 from the hub mounting portion 114 side toward the rim 112 side are parallel to each other. In other words, in the present embodiment, a case where the extension directions Ds of the engaged portions 117 are parallel to each other and the extension directions Ds are parallel to the moving direction Dm of the engaging portion 134 (described later) is illustrated.

Here, as shown in FIG. 2, a disc brake B is provided on the inner side of the wheel 11, more specifically, on the inner side of the hub H coupled to the hub mounting portion 114. The disc brake B includes a brake rotor B1 and a caliper B2. The brake rotor B1 rotates integrally with the wheel 11. The caliper B2 presses a friction member against the brake rotor B1. In the present embodiment, a case where the disc brake B is provided is illustrated. Alternatively, a drum brake may be provided. When the tire-wheel assembly is a drive wheel, the hub H to which the hub mounting portion 114 is assembled is connected to a drive shaft S as shown in FIG. 2. The drive shaft S is accommodated inside an axle J provided so as to extend through the hub H and the brake rotor B1. Then, when the tire-wheel assembly is a drive wheel, the distal end of the drive shaft S is inserted in the hub hole 113.

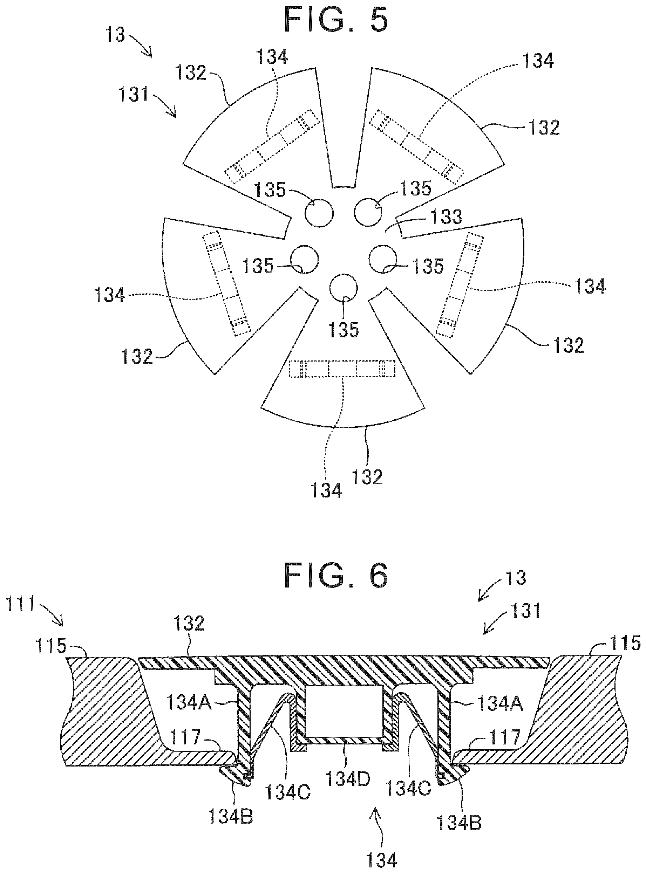

As shown in FIG. 1 and FIG. 2, the wheel cover 13 that is a component of the vehicle wheel structure 10 is formed so as to cover the entire or part of the design surface that is a surface corresponding to the outer side of the wheel 11, that is, to cover the air holes 116 of the wheel 11. The wheel cover 13 is attached to the wheel 11. As shown in FIG. 5, the wheel cover 13 includes the body 131 as a main element. Here, the wheel cover 13 is molded from, for example, a resin material.

The body 131 according to the present embodiment has a plurality of body forming members 132 and a coupling portion 133. The coupling portion 133 couples the body forming members 132 in the circumferential direction of the wheel 11 at the central part 111C of the disc 111 in a state attached to the wheel 11. Thus, the body forming members 132 are combined by the coupling portion 133, and the disc-shaped body 131 is attached so as to cover the entire design surface in the disc 111 of the wheel 11.

Here, in the present embodiment, a case where the body 131 has the plurality of fan-shaped body forming members 132 is illustrated. Specifically, the body 131 has five body forming members 132 in order to respectively cover or decorate the five air holes 116 provided in the disc 111 of the wheel 11. The number of the body forming members 132 is not limited and may be one or more. The shape of each of the body forming members 132 is not limited to a fan-shape, and various shapes may be adopted.

In the present embodiment, a case where the coupling portion 133 couples the body forming members 132 at the central part 111C of the wheel 11, that is, the disc 111, in a state attached to the wheel 11 is illustrated. However, for example, the coupling portion 133 is, of course, allowed to couple the body forming members 132 at a location other than the central part 111C of the wheel 11, that is, the disc 111, according to the shape of the disc 111 of the wheel 11, more specifically, a three-dimensional shape of the spokes 115. In this case as well, the body forming members 132 are combined by the coupling portion 133, and the disc-shaped body 131 can be attached to the disc 111 of the wheel 11.

The body 131, that is, each of the body forming members 132, has the engaging portion 134 formed so as to engage with the engaged portions 117 respectively provided at the spokes 115 of the disc 111 (wheel 11) so as to extend. Here, in the present embodiment, a case where the engaging portion 134 is provided to engage with the engaged portions 117 respectively provided at the two spokes 115 so as to extend is illustrated.

Although not specifically described, in a case where the wheel cover 13 is attached to the wheel 11, not only the engaging portions 134 are engaged with the engaged portions 117 but also, for example, the projection provided on the inner periphery of the hub hole 113 can be engaged with the hook member provided in the coupling portion 133 (see FIG. 2) or a peripheral groove provided in the rim 112 can be engaged with a fixing member. Thus, the wheel cover 13 can be attached to the wheel 11.

As shown in FIG. 6, the engaging portion 134 has two sets of a supporting portion 134A and an engaging hook 134B so as to engage with the two engaged portions 117 provided at the spokes 115 so as to extend. The supporting portions 134A are provided upright on the inner side when the body forming member 132 is fixed to the disc 111 of the wheel 11 and support the engaging hooks 134B. The engaging hooks 134B are respectively provided at the distal end sides of the supporting portions 134A. The engaging hooks 134B are provided so as to protrude toward the corresponding spokes 115 when the body forming member 132 is fixed to the disc 111 of the wheel 11 and are engaged with the engaged portions 117 provided at the spokes 115 so as to extend.

Here, in the engaging portion 134, the engaging hooks 134B engage with the engaged portions 117 with a predetermined engagement overlap width such that the wheel cover 13 is not detached in a state where the wheel cover 13 is attached to the wheel 11. In other words, in the engaging portion 134, engagement of the engaging hooks 134B with the engaged portions 117 is maintained in a manner such that the supporting portions 134A support the engaging hooks 134B so as to press the engaging hooks 134B against the spokes 115.

Incidentally, the engaging portion 134 is also formed from a resin material as in the case of the body 131, that is, the body forming member 132. For this reason, once a state where the supporting portions 134A continue to press the engaging hooks 134B engaged with the engaged portions 117 against the spokes 115, that is, once a state where the engaging portion 134 is engaged with the engaged portions 117 continues, a state where reaction force in the circumferential direction of the wheel 11 acts on the supporting portions 134A and the engaging hooks 134B from the engaged portions 117 continues. Once a state where the supporting portions 134A and the engaging hooks 134B resist against reaction force continues, so-called degradation, such as thermal creep and stress relaxation in terms of material characteristics, can occur in the supporting portions 134A and the engaging hooks 134B.

For this reason, backup clips 134C made of a thin sheet metal are assembled to the engaging portion 134 according to the present embodiment. The backup clips 134C serve as an urging member that urges the supporting portions 134A and the engaging hooks 134B toward the spokes 115 so as to resist against reaction force that acts from the engaged portions 117. In the present embodiment, as shown in FIG. 6, each of the backup clips 134C is assembled to between both the supporting portion 134A and the engaging hook 134B and a receiving portion 134D and held. Thus, reaction force that acts on the supporting portions 134A and the engaging hooks 134B from the engaged portions 117 is absorbed in a manner such that the backup clips 134C elastically deform between both the supporting portion 134A and the engaging hook 134B and the receiving portion 134D.

The wheel cover 13 according to the present embodiment has work holes 135 that allow fastening members T (hub nuts or hub bolts) for assembling the wheel 11 to the hub H to pass for fastening work. As shown in FIG. 2 and FIG. 5, the work holes 135 are provided in the coupling portion 133 and are through-holes formed in the axial direction.

The wheel cover 13 configured in this way is attached to the design surface that is the outer surface of the wheel 11 in a manner such that each engaging portion 134 provided on the body forming member 132 (body 131) is engaged with the engaged portions 117 provided at the spokes 115 of the disc 111 (wheel 11) so as to extend. Specifically, as shown in FIG. 1 and FIG. 2, in a state where the wheel cover 13 according to the present embodiment is attached to the wheel 11, each of the body forming members 132 can cover a corresponding one of the air holes 116 and cover up to the rim 112 of the wheel 11.

Incidentally, in a case where the vehicle drives, air having entered to below a floor of the vehicle body (not shown) partially flows from the inner side of the tire-wheel assembly toward the outer side. For this reason, external force caused by flow of air acts from the inner side toward the outer side on the wheel cover 13 attached to the wheel 11 of the vehicle driving. When the vehicle drives in a rainfall situation or in a snowfall situation, water or snow (ice) flows from the inner side of the tire-wheel assembly toward the outer side due to air flowing from the inner side of the tire-wheel assembly to the outer side. For this reason, not only external force caused by flow of air but also external force due to a collision, such as water and snow (ice), acts from the inner side toward the outer side on the wheel cover 13 attached to the wheel 11 of the vehicle driving in a rainfall situation or in a snowfall situation.

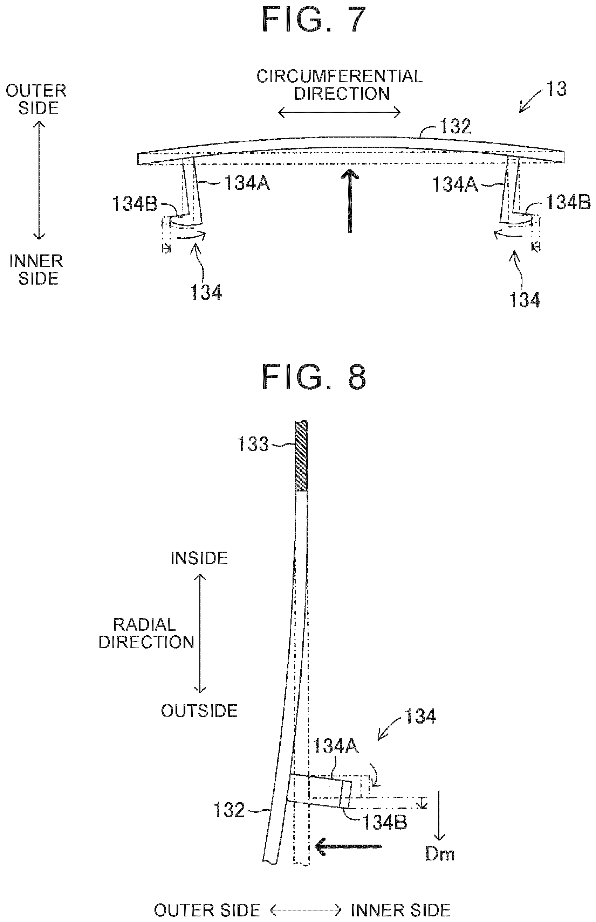

Here, as schematically shown in FIG. 7, a situation in which external force indicated by the thick arrow from the inner side toward the outer side acts on the body forming members 132 (body 131) indicated by the alternate long and short dashed line is assumed. In this situation, since external force acts from the inner side toward the outer side, an outward-oriented convex warp deformation (elastic deformation) temporarily occurs in the body forming member 132 (body 131) as indicated by the continuous line. For this reason, two sets of supporting portion 134A and engaging hook 134B that are components of the engaging portion 134 provided upright on the inner side, that is, the back side, of the body forming member 132 (body 131) are displaced in a direction to approach each other in the circumferential direction as indicated by circular-arc arrows in FIG. 7.

As schematically shown in FIG. 8, a situation in which external force indicated by the thick arrow acts from the inner side toward the outer side at the outer side in the radial direction, that is, at the rim 112 side of the wheel 11, on the body forming members 132 (body) indicated by the alternate long and short dashed line and coupled by the coupling portion 133 at the inner sides in the radial direction is assumed. As described above, the brake rotor B1 of the disc brake B is disposed on the inner side of the wheel 11. The vehicle body (not shown) is located on the inner side of the wheel 11. Thus, air, water, or the like that flows in under the floor of the vehicle body and flows from the inner side of the tire-wheel assembly toward the outer side needs to pass under the brake rotor B1 in a vertical direction, so a majority of the air, water, or the like flows at the rim 112 side of the wheel 11.

Therefore, in this situation, since external force acts from the inner side toward the outer side at the outer side in the radial direction of the body forming members 132 (body) of which the inner sides in the radial direction are coupled by the coupling portion 133, that is, the inner sides in the radial direction are fixed, a so-called cantilever state is established. Therefore, an outward-oriented warp deformation (elastic deformation) temporarily occurs in the body forming members 132 (body) as indicated by the continuous line. For this reason, two sets of supporting portion 134A and engaging hook 134B that are components of the engaging portion 134 provided upright on the inner side, that is, the back side, of each of the body forming members 132 (body) are displaced in a direction toward the outer sides in the radial direction, that is, the moving directions Dm, as indicated by circular-arc arrow in FIG. 8.

Furthermore, in the vehicle driving, centrifugal force directed outward in the radial direction acts on the wheel cover 13 attached to the wheel 11, particularly, the body forming members 132, and vibration from a road surface is also input. Both the centrifugal force and the vibration can contribute to occurrence of a temporal warp deformation (elastic deformation) of the body forming members 132 (body). As a result, a displacement of the supporting portions 134A and the engaging hooks 134B as shown in FIG. 8 can be facilitated.

In this way, in the engaging portion 134 provided at the body forming member 132 (body), once a temporary warp deformation (elastic deformation) occurs in the body forming member 132 (body) by the action of external force or the like, the engaging hooks 134B are displaced together with the supporting portions 134A. A displacement of the engaging hook 134B is relative movement with respect to the engaged portion 117 when the engaging hook 134B is engaged with the engaged portion 117. A range in which the engaging hook 134B relatively moves with respect to the engaged portion 117 is a region R.

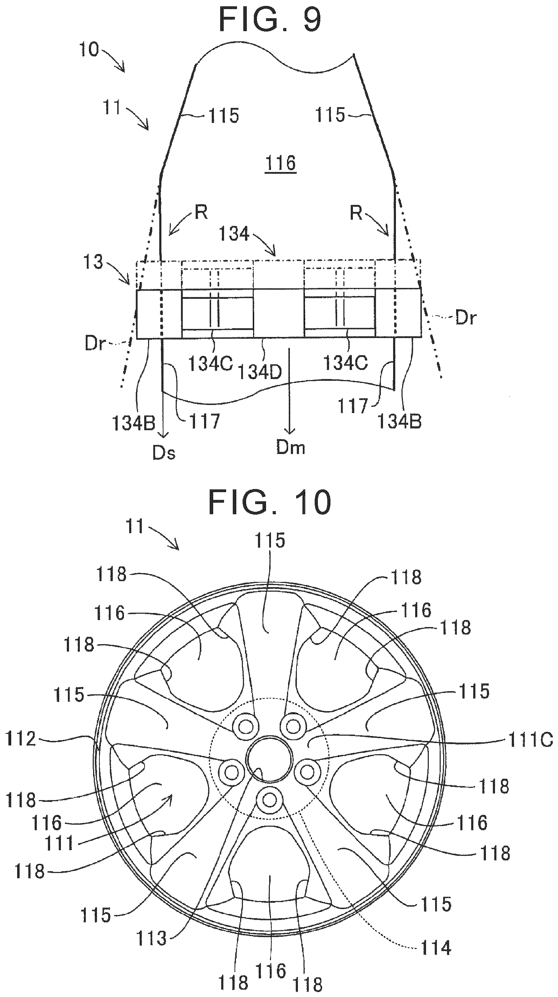

Incidentally, as described above, the extension directions Ds of the engaged portions 117 provided at the spokes 115 so as to extend are set so as to have an angle θ = Θ/2 with respect to the radial direction Dr. In the present embodiment, two engaged portions 117 are provided at the spokes 115 so as to extend such that the extension directions Ds are parallel to each other. Thus, as shown in FIG. 9, in the region R, even when the engaging hook 134B relatively moves with respect to the engaged portion 117 in the moving direction Dm, the engaging hook 134B can maintain a state engaged with the engaged portion 117. In other words, in this case, the engaged portion 117 is present also at a position to which the engaging hook 134B is displaced, so an engaged state can be maintained with a sufficient engagement overlap width, with the result that it is possible to suppress detachment of the wheel cover 13 from the wheel 11.

On the other hand, if the angle θ is smaller than Θ/2, the extension direction Ds gets close to the radial direction Dr indicated by the alternate long and two-short dashed line in FIG. 9. In this case, in the engaging portion 134 before relative movement, indicated by the thin alternate long and short dashed line, the engaging hook 134B has an engagement overlap width with the engaged portion 117. However, when the engaging portion 134 relatively moves as indicated by the continuous line, the engaged portion 117 is not present at a destination of movement or an engagement overlap width between the engaging hook 134B and the engaged portion 117 reduces even when the engaged portion 117 is present, with the result that engagement force reduces, and there is a high possibility that engagement is released. In other words, when the angle θ is smaller than Θ/2, there is a high possibility that the wheel cover 13 is detached from the wheel 11.

As can be understood from the above description, the vehicle wheel structure 10 according to the embodiment includes the wheel 11 configured to support the tire 12 and be assembled to the vehicle, and the wheel cover 13 serving as a wheel attachment member attached to the wheel 11. The wheel cover 13 includes the body 131 and the engaging portions 134 provided at the body 131. The wheel 11 has the engaged portions 117 provided so as to extend to engage with the engaging portions 134. In a state where each of the engaging portions 134 and the corresponding engaged portions 117 are engaged with each other to attach the wheel cover 13 to the wheel 11, in the region R in which each of the engaging portions 134 relatively moves with respect to the corresponding engaged portions 117, the engaged portions 117 are provided so as to extend to relatively approach the engaging portion 134. In this case, the wheel cover 13 is molded from a resin material.

In this case, the engaged portions 117 are provided at the spokes 115. The spokes 115 couple the hub mounting portion 114 to the rim 112. The hub mounting portion 114 is assembled to the hub H of the vehicle at the central part 111C of the disc 111, that is, the center side of the wheel 11. The rim 112 supports the tire 12 at the outer peripheral side of the wheel 11. The engaging portion 134 is engaged with the engaged portions 117 respectively provided at the adjacent two spokes 115 in the circumferential direction of the wheel 11. In this case, the engaged portions 117 respectively provided at the adjacent two spokes 115 are provided at the spokes 115 so as to extend parallel to each other from the hub mounting portion 114 side toward the rim 112 side.

In these cases, each of the engaging portions 134 has the supporting portions 134A provided upright from the body 131 and the engaging hooks 134B supported by the supporting portions 134A and engaged with the engaged portions 117. In this case, each of the engaging portions 134 has the backup clips 134C. The backup clips 134C serve as an urging member that urges the supporting portions 134A and the engaging hooks 134B against reaction force that acts in the circumferential direction of the wheel 11 from the engaged portions 117 in a state where the engaging hooks 134B are engaged with the engaged portions 117.

In this case, the body 131 is formed so as to cover the entire surface of the wheel 11, corresponding to the outer side of the vehicle, in a state attached to the wheel 11. In this case, the body 131 has the body forming members 132 and the coupling portion 133 that couples the body forming members 132 in the circumferential direction of the wheel 11 in a state attached to the wheel 11. In this case, the coupling portion 133 couples the body forming members 132 at the central part 111C of the disc 111 of the wheel 11 in a state attached to the wheel 11.

With the vehicle wheel structure 10, even when the engaging portion 134 relatively moves with respect to the corresponding engaged portions 117 in the region R, the engaged portions 117 can be present at a destination of movement of the engaging portion 134. Thus, even when external force, vibration, centrifugal force, or the like acts on the wheel cover 13 and, therefore, the engaging portion 134 relatively moves with respect to the corresponding engaged portions 117, an engaged state of the engaging portion 134 with the engaged portions 117 can be maintained. Therefore, it is possible to suppress detachment of the wheel cover 13 from the wheel 11.

Since the engaged state of the engaging portion 134 with the engaged portions 117 can be maintained, occurrence of a warp deformation in the body 131 (body forming member 132) can be suppressed. Thus, with the vehicle wheel structure 10, for example, it is also possible to suppress occurrence of abnormal noise due to contact of the body 131 (body forming members 132) with the wheel 11.

### 2. First Example useful for understanding the invention

In the above-described embodiment, a case where the extension directions Ds of the engaged portions 117 respectively provided at the two spokes 115 so as to extend are parallel to each other has been illustrated. In this case, the moving directions Dm of the engaging portion 134 is also parallel to the extension directions Ds, and, even when the engaging portion 134 relatively moves in the region R, the engaged portions 117 are present at a destination of movement.

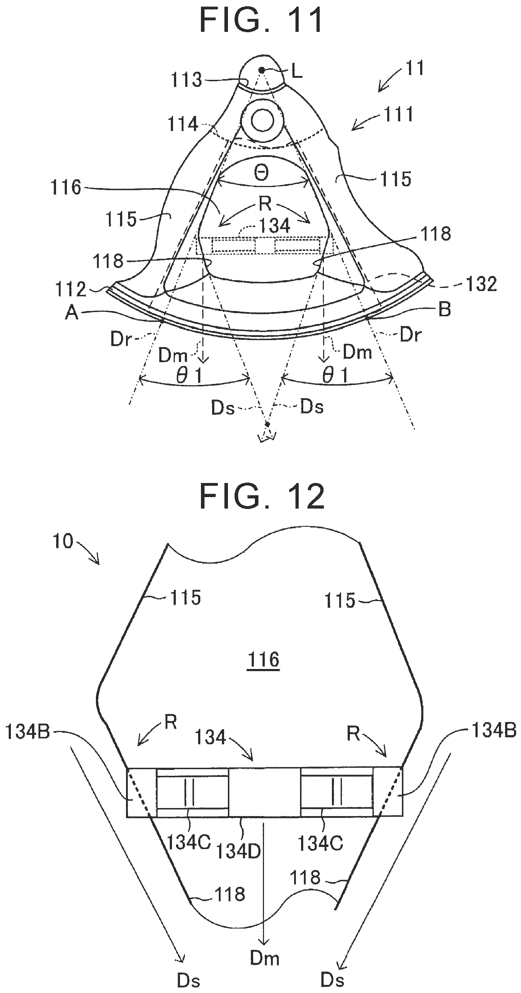

Incidentally, to further reliably maintain the engaged state with the engaging portion 134, engaged portions 118 respectively provided at the adjacent two spokes 115 can be provided at the spokes 115 so as to extend to approach each other in the circumferential direction of the wheel 11 from the hub mounting portion 114 side toward the rim 112 side as shown in FIG. 10 and FIG. 11. In other words, in this example useful for understanding the invention, the engaged portions 118 may be provided so as to extend such that the extension directions Ds intersect with each other in the moving direction Dm of the engaging portion 134.

Specifically, in the first example useful for understanding the invention, as shown in FIG. 11, an angle θ1 formed between the radial direction Dr and the extension direction Ds is set so as to be larger than Θ/2 and larger than the angle θ described in the above-described embodiment. Thus, in the case of the first example useful for understanding the invention, as schematically shown in FIG. 12, once the engaging portion 134 relatively moves with respect to the engaged portions 118 in the moving direction Dm toward the outer side in the radial direction, an engagement overlap width with the engaging hooks 134B increases. Therefore, according to the first example useful for understanding the invention as well, similar advantageous effects to those of the above-described embodiment are obtained.

In the case of the first example useful for understanding the invention, it is possible to sufficiently ensure an engagement overlap width between the engaging hooks 134B of the engaging portion 134 and the engaged portions 118. Therefore, for example, the size of the engaging hook 134B according to the first example useful for understanding the invention can be made smaller than the size of the engaging hook 134B described in the above-described embodiment. Even when the size of each engaging hook 134B is reduced to reduce the whole size of the engaging portion 134, similar advantageous effects to those of the above-described embodiment are expected.

### 3. First Modification

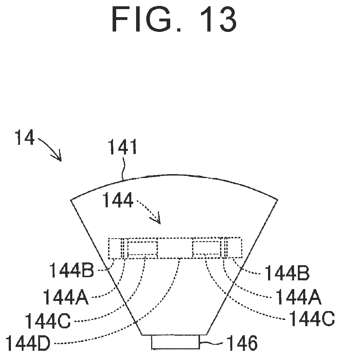

In the above-described embodiment and first example useful for understanding the invention, the wheel cover 13 serving as a wheel attachment member in which the plurality of (for example, five) body forming members 132 that are components of the body 131 is coupled by the coupling portion 133 has been illustrated. Instead of this, as shown in FIG. 13, accessory parts 14 similar to the body forming members 132 according to the above-described embodiment may be attached to the wheel 11 as a wheel attachment member so as to close the air holes 116 of the wheel 11.

Each of the accessory parts 14 has a body 141 and an engaging portion 144. Here, the body 141 and the engaging portion 144 respectively have the same configurations as the body forming member 132 and the engaging portion 134 described in the above-described embodiment. Therefore, the description of the body 141 and the engaging portion 144 is omitted.

The accessory part 14 has a fitting portion 146 that is fitted to the spoke 115 at the hub mounting portion 114 side of the spoke 115. Thus, the accessory part 14 is attached (fixed) to the disc 111 of the wheel 11 in a manner such that, for example, the fitting portion 146 is fitted to the spoke 115 and subsequently the engaging portion 144 is engaged with the engaged portions 117 or the engaged portions 118.

In this way, as in the case of the above-described embodiment and first example useful for understanding the invention, external force, vibration, centrifugal force, or the like also acts on the accessory part 14 shown in FIG. 13 as the vehicle drives. Therefore, in the accessory part 14 as well, the engaging portion 144 relatively moves with respect to the engaged portions 117 or the engaged portions 118. Different from the case of the above-described embodiment and first example useful for understanding the invention, the accessory parts 14 are not coupled to one another. Therefore, in the case of the accessory parts 14, a warp deformation (elastic deformation) of the body 141 as described in the above-described embodiment is less likely to occur.

However, since the individual accessory parts 14 are independently attached to the disc 111 of the wheel 11, the accessory parts 14 are more easily displaced toward the outer side in the radial direction of the wheel 11 by the action of centrifugal force. In other words, in the accessory part 14, the engaging portion 144 is relatively displaced with respect to the engaged portions 117 or the engaged portions 118 by the action of centrifugal force.

Incidentally, the engaged portions 117 or the engaged portions 118 are also provided in the wheel 11 to which the accessory parts 14 are attached as in the case of the above-described embodiment and first example useful for understanding the invention. Therefore, even when centrifugal force acts on the accessory part 14 and the engaging portion 144 is relatively displaced with respect to the engaged portions 117 or the engaged portions 118, the engaged portions 117 or the engaged portions 118 can be present at a destination of movement of the engaging portion 144, so similar advantageous effects to those of the above-described embodiment and first example useful for understanding the invention are also obtained from the first modification.

### 4. Other Modifications

In the above-described embodiment, example and modification, the engaged portions 117 or the engaged portions 118 are respectively provided at the adjacent two spokes 115, and the engaging portion 134 has two sets of supporting portion 134A and engaging hook 134B so as to engage with the engaged portions 117 or the engaged portions 118. However, in a case where the engaged portion 117 or the engaged portion 118 is provided at one of the adjacent two spokes 115 and another fitting member is provided at the other one of the spokes 115, the rim 112, or/and the hub mounting portion 114, the engaging portion 134 may have only a set of supporting portion 134A and engaging hook 134B. In this case as well, since the engaged portion 117 or the engaged portion 118 is present at a destination of movement to which the engaging portion 134 has relatively moved, it is possible to suppress detachment of the wheel cover 13 or the accessory parts 14 together with another fitting member.

In the above-described embodiment, example and modification, a case where one engaging portion 134 is provided has been illustrated. However, the number of the engaging portions 134 is not limited to one, and a plurality of the engaging portions 134 may be provided as needed. In this case as well, as in the case of the above-described embodiment and modifications, it is possible to suppress detachment of the wheel cover 13 or the accessory parts 14.

## Claims

1. A vehicle wheel structure (10) comprising:
a wheel (11) configured to support a tire (12) and be assembled to a vehicle; and
a wheel attachment member (13; 14) configured to be attached to the wheel (11), wherein:
the wheel attachment member (13; 14) includes
a body (131; 141), and
an engaging portion (134; 144) provided at the body (131; 141);
the wheel (11) has an engaged portion (117; 118) provided so as to extend to engage with the engaging portion (134; 144);
the engaging portion (134; 144) and the engaged portion (117; 118) are configured to engage with each other to attach the wheel attachment member (13; 14) to the wheel (11);
the engaged portion (117; 118) is provided at a spoke (115), the spoke (115) coupling a hub mounting portion (114) to a rim (112), the hub mounting portion (114) being assembled to a hub (H) of the vehicle at a center side of the wheel (11), the rim (112) supporting the tire (12) at an outer peripheral side of the wheel (11); and
the engaging portion (134; 144) is configured to engage with the engaged portions (117; 118) respectively provided at the adjacent two spokes (115) in a circumferential direction of the wheel (11), **characterised in that**:
the engaged portions (117) respectively provided at the adjacent two spokes (115) are provided at the spokes (115) so as to extend parallel to each other from the hub mounting portion (114) side toward the rim (112) side.

2. The vehicle wheel structure (10) according to claim 1, wherein the engaging portion (134; 144) has
a supporting portion (134A; 144A) provided upright from the body (131; 141), and
an engaging hook (134B; 144B) that is supported by the supporting portion (134A; 144A) and engaged with the engaged portion (117; 118).

3. The vehicle wheel structure (10) according to claim 2, wherein the engaging portion (134; 144) has an urging member (134C; 144C) that urges the supporting portion (134A; 144A) and the engaging hook (134B; 144B) against reaction force acting from the engaged portion (117; 118) in a circumferential direction of the wheel (11) in a state where the engaging hook (134B; 144B) is engaged with the engaged portion (117; 118).

4. The vehicle wheel structure (10) according to claim 1, wherein the wheel attachment member (13; 14) is molded from a resin material.

5. The vehicle wheel structure (10) according to claim 1, wherein the body (131) is formed so as to cover an entire surface of the wheel (11), corresponding to an outer side of the vehicle, in a state attached to the wheel (11).

6. The vehicle wheel structure (10) according to claim 5, wherein the body (131) has
a plurality of body forming members (132), and
a coupling portion (133) that couples the body forming members (132) in a circumferential direction of the wheel (11) in a state attached to the wheel (11).

7. The vehicle wheel structure (10) according to claim 6, wherein the coupling portion (133) couples the plurality of body forming members (132) at a central part of the wheel (11) in a state attached to the wheel (11).

## Patentansprüche

1. Fahrzeugradkonstruktion (10), die umfasst:
ein Rad (11), das so konfiguriert ist, dass es einen Reifen (12) trägt und an einem Fahrzeug montiert werden kann; und
ein Radbefestigungselement (13; 14), das so konfiguriert ist, dass es an dem Rad (11) befestigt werden kann, wobei:
das Radbefestigungselement (13; 14) Folgendes enthält:
einen Körper (131; 141) und
einen Eingriffsabschnitt (134; 144), der an dem Körper (131; 141) vorgesehen ist;
wobei das Rad (11) einen Eingriffsabschnitt (117; 118) aufweist, der so gebildet ist, dass er sich so erstreckt, dass er mit dem Eingriffsabschnitt (134; 144) in Eingriff kommt;
wobei der Eingriffsabschnitt (134; 144) und der Eingriffsabschnitt (117; 118) so konfiguriert sind, dass sie miteinander in Eingriff kommen, um das Radbefestigungselement (13; 14) am Rad (11) zu befestigen;
wobei der Eingriffsabschnitt (117; 118) an einer Speiche (115) vorgesehen ist, wobei die Speiche (115) einen Nabenbefestigungsabschnitt (114) mit einer Felge (112) koppelt, wobei der Nabenbefestigungsabschnitt (114) an einer Mittenseite des Rades (11) an einer Nabe (H) des Fahrzeugs montiert ist, wobei die Felge (112) den Reifen (12) an einer Außenumfangsseite des Rades (11) trägt; und
der Eingriffsabschnitt (134; 144) so konfiguriert ist, dass er mit den Eingriffsabschnitten (117; 118) in Eingriff kommt, die jeweils an den beiden benachbarten Speichen (115) in Umfangsrichtung des Rades (11) vorgesehen sind, **dadurch gekennzeichnet, dass**:
die an den benachbarten beiden Speichen (115) jeweils vorgesehenen Eingriffsabschnitte (117) an den Speichen (115) so angeordnet sind, dass sie sich parallel zueinander von der Seite des Nabenbefestigungsabschnitts (114) in Richtung der Felgenseite (112) erstrecken.

2. Fahrzeugradkonstruktion (10) nach Anspruch 1, wobei der Eingriffsabschnitt (134; 144) Folgendes aufweist:
einen vom Körper (131; 141) aufrecht vorstehenden Stützabschnitt (134A; 144A) und
einen Eingriffshaken (134B; 144B), der von dem Stützabschnitt (134A; 144A) getragen wird und mit dem Eingriffsabschnitt (117; 118) in Eingriff steht.

3. Fahrzeugradkonstruktion (10) nach Anspruch 2, wobei der Eingriffsabschnitt (134; 144) ein Druckelement (134C; 144C) aufweist, das den Stützabschnitt (134A; 144A) und den Eingriffshaken (134B; 144B) gegen eine vom Eingriffsabschnitt (117; 118) ausgehende Reaktionskraft in Umfangsrichtung des Rades (11) in einem Zustand drückt, in dem der Eingriffshaken (134B; 144B) mit dem Eingriffsabschnitt (117; 118) in Eingriff steht.

4. Fahrzeugradkonstruktion (10) nach Anspruch 1, wobei das Radbefestigungselement (13; 14) aus einem Kunststoffmaterial geformt ist.

5. Fahrzeugradkonstruktion (10) nach Anspruch 1, wobei der Körper (131) so gebildet ist, dass er im am Rad (11) befestigten Zustand die gesamte Oberfläche des Rades (11) abdeckt, die der Außenseite des Fahrzeugs entspricht.

6. Fahrzeugradkonstruktion (10) nach Anspruch 5, wobei der Körper (131) Folgendes aufweist:
eine Vielzahl von Körperbildungselementen (132) und
einen Verbindungsabschnitt (133), der die Körperbildungselemente (132) in Umfangsrichtung des Rades (11) in einem am Rad (11) befestigten Zustand miteinander koppelt.

7. Fahrzeugradkonstruktion (10) nach Anspruch 6, wobei der Verbindungsabschnitt (133) die Vielzahl der Körperbildungselemente (132) an einem mittleren Abschnitt des Rades (11) in einem am Rad (11) befestigten Zustand miteinander koppelt.

## Revendications

1. Structure de roue de véhicule (10) comprenant :
une roue (11) conçue pour supporter un pneu (12) et pour être montée sur un véhicule, et
un élément de fixation sur roue (13 ; 14) conçu pour être fixé à la roue (11) ;
ledit élément de fixation sur roue (13 ; 14) comprenant
un corps (131 ; 141), et
une portion d'accouplement (134 ; 144) prévue sur le corps (131 ; 141) ;
la roue (11) présentant une portion accouplée (117 ; 118) prévue en s'étendant de façon à pouvoir s'accoupler avec la portion d'accouplement (134 ; 144),
la portion d'accouplement (134 ; 144) et la portion accouplée (117 ; 118) étant conçues pour s'accoupler l'une à l'autre afin de fixer l'élément de fixation sur roue (13 ; 14) à la roue (11),
la portion accouplée (117 ; 118) étant prévue au niveau d'un rayon (115), le rayon (115) couplant une portion de montage de moyeu (114) à une jante (112), la portion de montage de moyeu (114) étant assemblée à un moyeu (H) du véhicule au niveau du centre de la roue (11), la jante (112) supportant le pneu (12) au niveau d'un côté périphérique extérieur de la roue (11), et
la portion d'accouplement (134 ; 144) étant conçue pour s'accoupler avec les portions accouplées (117 ; 118) prévues respectivement sur les deux rayons (115) adjacents dans une direction circonférentielle de la roue (11) ; **caractérisée en ce que** :
les portions accouplées (117) prévues respectivement sur les deux rayons (115) adjacents sont prévues sur les rayons (115) de façon à s'étendre parallèlement l'une à l'autre entre le côté portion de montage de moyeu (114) et le côté jante (112).

2. Structure de roue de véhicule (10) selon la revendication 1, dans laquelle la portion d'accouplement (134 ; 144) présente
une portion de support (134A ; 144A) prévue verticalement à partir du corps (131 ; 141), et
un crochet d'accouplement (134B ; 144B) qui est supporté par la portion de support (134A ; 144A) et qui s'accouple avec la portion accouplée (117 ; 118).

3. Structure de roue de véhicule (10) selon la revendication 2, dans laquelle la portion d'accouplement (134 ; 144) présente un élément de poussée (134C ; 144C) qui pousse la portion de support (134A ; 144A) et le crochet d'accouplement (134B ; 144B) contre une force de réaction exercée par la portion accouplée (117 ; 118) dans une direction circonférentielle de la roue (11), lorsque le crochet d'accouplement (134B ; 144B) est accouplé avec la portion accouplée (117 ; 118).

4. Structure de roue de véhicule (10) selon la revendication 1, dans laquelle l'élément de fixation sur roue (13 ; 14) est moulé à partir d'une matière résineuse.

5. Structure de roue de véhicule (10) selon la revendication 1, dans laquelle le corps (131) est formé de façon à recouvrir toute la surface de la roue (11) correspondant à un côté extérieur du véhicule, dans un état fixé à la roue (11).

6. Structure de roue de véhicule (10) selon la revendication 5, dans laquelle le corps (131) présente
une pluralité d'éléments de formation de corps (132), et
une portion de couplage (133) qui couple les éléments de formation de corps (132) dans une direction circonférentielle de la roue (11) dans un état fixé à la roue (11).

7. Structure de roue de véhicule (10) selon la revendication 6, dans laquelle la portion de couplage (133) couple la pluralité d'éléments de formation de corps (132) à une partie centrale de la roue (11) dans un état fixé à la roue (11).
